# EUROPÄISCHE PATENTSCHRIFT

(11) **EP 3 162 635 B1**
(45) Veröffentlichungstag und Bekanntmachung des Hinweises auf die Patenterteilung: **24.04.2019**
(21) Anmeldenummer: 15465556.7
(22) Anmeldetag: 30.10.2015
(51) Int. Cl.: B60R 1/00

(54) **KAMERABASIERTES ANZEIGESYSTEM**
CAMERA-BASED DISPLAY SYSTEM
SYSTEME D'AFFICHAGE OPTIQUE A CAMERA

(43) Veröffentlichungstag der Anmeldung: 03.05.2017
(73) Patentinhaber: Continental Automotive GmbH, 30165 Hannover (DE)
(72) Erfinder: Meissner, Claudiu, 300752 Timisoara (RO)

(56) Entgegenhaltungen:
- DE-A1-102012 019 508

## Beschreibung

### Technisches Gebiet

Die Erfindung betrifft ein Verfahren zur Anzeige eines von einer Kamera aufgenommenen Bildes auf einem Display in einem Fahrzeug.

### Stand der Technik

In Fahrzeugen, wie insbesondere Kraftfahrzeugen mit einer Fahrgastzelle, werden zur Sicherstellung der rückwärtigen Sicht in vielen bekannten Anwendungsfällen Spiegel eingesetzt. Hierbei sind insbesondere Fahrzeuge mit zwei Außenspiegeln und einem zentralen Innenspiegel bekannt. Nachteilig an der Verwendung von Spiegelelementen zur Sicherstellung der rückwärtigen oder auch der seitlichen Sicht ist insbesondere, dass die Spiegel die Breite des Fahrzeugs erhöhen und von den Außenspiegeln zusätzlich eine Geräuschentwicklung ausgeht. Die Geräuschentwicklung resultiert insbesondere aus der Umströmung der Außenspiegel durch die das Fahrzeug umgebende Luft. Die Geräuschentwicklung ist im Wesentlichen nachteilig für den Komfort des Fahrers. Der Innenspiegel ist insbesondere nachteilig, da er einen wesentlichen Teil der Windschutzscheibe überdeckt und gewöhnlich direkt im Sichtfeld des Fahrers angeordnet ist. Die Sicht nach vorne wird so regelmäßig durch den verwendeten Innenspiegel begrenzt.

Weiterhin sind sogenannte Kamera-Monitor-Systeme bekannt, bei welchen eine Kamera ein Bild aufnimmt und dieses auf einem Monitor dargestellt wird. Nach diesem Prinzip können sowohl die Außenspiegel als auch die Innenspiegel ersetzt werden. Abhängig von den jeweils geltenden Gesetzen ist ein solches System zur Sicherstellung der rückwärtigen Sicht auch für die Benutzung im Straßenverkehr zugelassen.

Nachteilig an den Kamera-Monitor-Systemen ist, dass die Monitore im Inneren des Fahrzeugs angeordnet sind, wodurch es zu einer Verringerung des zur Verfügung stehenden Innenraums kommt, da die Monitore und deren Halterungen zusätzlichen Bauraum beanspruchen. Weiterhin geht von einem zentral im Bereich der Windschutzscheibe angeordneten Monitor, der beispielsweise den zentralen Rückspiegel ersetzt, ebenfalls eine nicht unwesentliche Einschränkung des nach vorne gerichteten Sichtfeldes des Fahrers aus.

Die DE 10 2012 019 508 A1 offenbart ein Fahrzeug, mit wenigstens einem einen Sektor der Umgebung des Fahrzeugs erfassenden Umgebungssensor und einem Display zum Anzeigen einer von Daten des Umgebungssensors abgeleiteten Darstellung des Sektors. Dabei umfasst das Display einen Anzeigeschirm, der wenigstens zeitweilig transparent ist, um eine Beobachtung der Umgebung des Fahrzeugs durch den Anzeigebildschirm und eine Außenscheibe der Fahrgastzelle des Fahrzeugs hindurch zu ermöglichen. Ferner ist es vorgesehen, dass eine Steuereinheit des Displays mit Mitteln zum Überwachen der Blickrichtung eines Fahrers des Fahrzeugs verbunden und eingerichtet ist, anhand der Blickrichtung zu beurteilen, ob der Fahrer das Display beachtet oder nicht und die Auffälligkeit der Darstellung hoch zu machen, wenn beurteilt wird, dass der Fahrer das Display beachtet, und die Auffälligkeit niedrig zu machen, wenn beurteilt wird, dass der Fahrer das Display nicht beachtet.

### Darstellung der Erfindung, Aufgabe, Lösung, Vorteile

Daher ist es die Aufgabe der vorliegenden Erfindung, ein Verfahren zum Betrieb einer Vorrichtung eines Fahrzeugs zur Sicherstellung der rückwärtigen und/oder seitlichen Sicht zu schaffen, welches keine Spiegel aufweist und außerdem nicht die Rundumsicht des Fahrers beeinträchtigt.

Die Aufgabe wird durch ein Verfahren mit den Merkmalen von Anspruch 1 gelöst.

Ein Ausführungsbeispiel der Erfindung betrifft ein Fahrzeug mit einem kamerabasierten System zur Sicherstellung der rückwärtigen und/oder der seitlichen Sicht., mit zumindest einer Kamera und mit zumindest einem Anzeigeelement, auf welchem das von der Kamera aufgenommene Bild anzeigbar ist, wobei das Anzeigeelement durch zumindest ein im inaktiven Zustand transparentes Display gebildet ist.

Das Fahrzeug ist insbesondere dazu ausgestattet, die bisher bekannten konventionellen Spiegel durch kamerabasierte Systeme zu ersetzen. Die kamerabasierten Systeme weisen hierzu zumindest eine Kamera auf und zumindest ein Anzeigeelement. Zusätzlich kann eine Recheneinheit vorgesehen sein, die es erlaubt die von der Kamera aufgenommenen Bilder zu bearbeiten und die Bildausgabe anzupassen. In einer erfindungsgemäßen Ausführungsform ist es insbesondere vorgesehen, dass das Display transparent ist. Das Display ist bevorzugt zumindest dann transparent, wenn aktuell kein Bild auf ihm angezeigt wird. Der Fahrer beziehungsweise andere Insassen des Fahrzeugs können dann ungehindert durch das Display hindurch gucken.

Durch das Anzeigen eines Bildes kann der Grad der Transparenz gleichbleiben, abnehmen oder vollständig verschwinden. Diese technischen Eigenschaften werden im Wesentlichen durch die Auswahl des Displays bestimmt. Ein transparentes Display ist vorteilhaft, da keine Sichtbehinderung für die Insassen des Fahrzeugs entsteht.

Der inaktive Zustand des Displays beschreibt einen Zustand, in welchem kein Bild auf dem Display angezeigt wird.

Besonders vorteilhaft ist es, wenn das Fahrzeug eine Vorrichtung zur Erkennung der Blickrichtung des Fahrers aufweist, wobei die Vorrichtung mit dem Anzeigeelement derart gekoppelt ist, dass ein Bild in Abhängigkeit von der Blickrichtung des Fahrers angezeigt wird.

Eine Vorrichtung zur Erkennung der Blickrichtung des Fahrers kann vorteilhaft durch eine Kamera gebildet sein. Geeignete Algorithmen, die in einem Steuergerät oder einer Recheneinheit hinterlegt sein können, können die aufgenommenen Bilder derart analysieren, dass die Kopfbewegung und/oder die Augenbewegung des Fahrers oder anderer Insassen ermittelt werden kann. Auf diese Weise kann insbesondere die Blickrichtung der Insassen ermittelt werden, wodurch ebenfalls ermittelt werden kann, welcher Bereich des Fahrzeugs oder der Umgebung gerade von dem Insassen betrachtet wird.

Auch ist es vorteilhaft, wenn die Vorrichtung zur Erkennung der Blickrichtung des Fahrers durch zumindest eine Kamera gebildet ist, wobei die Kopfbewegung und/oder die Augenbewegung des Fahrers durch die Kamera bestimmbar ist. Eine Kamera ist besonders vorteilhaft, da die Bilder auf einfache Weise unter Verwendung bekannter Algorithmen ausgewertet werden können und so eine verlässliche Erkennung der Blickrichtung erreicht werden kann. Durch den Einsatz einer zweiten Kamera, die bevorzugt eine abweichende Orientierung aufweist und insbesondere in einem abweichenden Winkel zu den Insassen steht, kann eine Verifizierung und Verbesserung der Erkennung der Blickrichtung erreicht werden.

Ein bevorzugtes Ausführungsbeispiel ist dadurch gekennzeichnet, dass das Fahrzeug eine Mehrzahl von Kameras aufweist, wobei die Kameras zur Aufnahme von mehreren Blickwinkeln angeordnet sind. Insbesondere die Kameras, die den Außenbereich aufnehmen, sind bevorzugt derart angeordnet, dass unterschiedliche Blickwinkel aufgenommen werden können. Bevorzugt wird sowohl eine rückwärtige Sicht als auch eine seitliche Sicht aufgenommen. Durch die Überlagerung mehrerer Bilder oder die Kombination mehrere Bilder können auch Panoramaaufnahmen erzeugt werden oder Aufsichten auf das Fahrzeug.

Auch ist es zu bevorzugen, wenn ein Display im Bereich der Windschutzscheibe angeordnet ist. Insbesondere mittig zentral am oberen Endbereich der Windschutzscheibe ist ein bevorzugter Montageort, der dem bekannten konventionellen Rückspiegel entspricht. Alternativ kann auch eine Anordnung auf dem Armaturenbrett vorgesehen werden.

Darüber hinaus ist es vorteilhaft, wenn ein Display zwischen dem Fahrer und einem Fenster des Fahrzeugs angeordnet ist. Dies ist besonders vorteilhaft, um dem Fahrer beziehungsweise anderen Insassen einen einfachen Blick auf das Display zu ermöglichen. Durch die transparenten Eigenschaften des Displays ist die Sicht der Fahrers beziehungsweise der Insassen durch das Display nicht beeinträchtigt.

Weiterhin ist es vorteilhaft, wenn auf der linken Seite des Fahrzeugs und auf der rechten Seite des Fahrzeugs jeweils im Bereich der A-Säule ein oder mehrere Displays angeordnet sind. Dies ist vorteilhaft, da die gewohnte Anordnung durch die heute verwendeten konventionellen Spiegel beibehalten werden kann.

Die Erfindung betrifft ein Verfahren zur Darstellung von zumindest einem Kamerabild auf einem Display in einem Fahrzeug, wobei auf dem Display abhängig von der ermittelten Blickrichtung des Fahrers ein von einer Kamera aufgenommenes Bild dargestellt wird, wobei es ansonsten transparent bleibt. Das Verfahren ist besonders vorteilhaft, da das Display im inaktiven Zustand, in dem es keine Bilder anzeigt, die Sicht des Fahrers und der Insassen nicht behindert.

Ferner ist es vorgesehen, dass das auf dem Display angezeigte Bild abhängig von der erfassten Blickrichtung des Fahrers angepasst wird, wobei ein Verschwenken und/oder ein Verdrehen und/oder ein Zoomen des angezeigten Bildes in Abhängigkeit von der erfassten Blickrichtung des Fahrers vorgenommen wird.

Dies ist vorteilhaft, um beispielsweise die Veränderung des wahrgenommenen Bildes durch eine Kopfbewegung oder Blickbewegung, wie es aktuell bei Spiegelsystemen auftritt, darstellen zu können. Dies erleichtert die Gewöhnung an die neue Technologie und ermöglicht eine flexiblere Darstellung der Außenumgebung. Die Sicht kann dadurch verbessert werden. Außerdem können Sonderfunktionen realisiert werden, die beispielsweise für spezielle Fahrmanöver vorteilhaft sind. Beispielsweise kann das Sichtfeld beim Einparken angepasst werden, indem etwa die rückwärtige Sicht derart abgeändert wird, dass der Bordstein vergrößert abgebildet wird.

Auch ist es zweckmäßig, wenn auf dem Display ein Bild angezeigt wird, wenn der Blick des Fahrers auf das Display gerichtet ist. Dies ist vorteilhaft, da das Display nur dann aktiviert wird, wenn es auch tatsächlich im Sichtbereich des Fahrers liegt. Der Sichtbereich kann dabei in den aktiven Sichtbereich, der direkt von den Augen erfasst wird, und den passiven Sichtbereich, der beispielsweise nur peripher im Augenwinkel wahrgenommen wird, unterschieden werden. Auf diese Weise kann die Anzeige unterdrückt werden, wenn der Fahrer seine Aufmerksamkeit nicht auf das Display richtet. Dadurch kann die Störung des Fahrers durch Bildbewegungen im passiven Sichtfeld vermindert werden.

Darüber hinaus ist es vorteilhaft, wenn ein Vergleichsblickfeld definiert wird, wobei das Display in dem Vergleichsblickfeld angeordnet ist, wobei ein Bild auf dem Display angezeigt wird, wenn die Blickrichtung des Fahrers auf das Vergleichsblickfeld gerichtet ist. Das Vergleichsblickfeld ist durch eine frei zu gestaltende Fläche definiert, die sich durch eine Projektion auf die inneren Oberflächen des Fahrzeugs ergibt. Das Vergleichsblickfeld ist bevorzugt größer ausgelegt als das Display selbst, damit das Display so frühzeitig aktiviert wird, dass die Anzeige vollständig aufgebaut ist, wenn der Fahrer das Display fokussiert. Es kann sonst zu störenden Effekten kommen, wenn das Anschalten des Displays erst stattfindet, wenn der Fahrer das Display schon fokussiert hat. Außerdem kann so ein störender Zeitverzug entstehen, der mitunter zu Sicherheitsproblemen führen kann.

Außerdem ist es vorteilhaft, wenn das von der Kamera aufgenommene Bild in einer Recheneinheit verarbeitet und bearbeitet wird bevor es auf einem Display dargestellt wird, wobei das Bild derart angepasst wird, dass es mit dem von dem Fahrer bei seiner jeweiligen Blickrichtung zu sehende Bild bei Verwendung eines gewöhnlichen Spiegels identisch ist. Dies ist vorteilhaft, um die Eingewöhnung an die neue Technologie so einfach wie möglich zu gestalten. Das wahrgenommene Bild ergibt sich bei der Verwendung von Spiegeln aus geometrischen Zusammenhängen und den Grundsätzen der Optik in einer einfachen Weise abhängig vom jeweiligen Blickwinkel des Fahrers. Diese Zusammenhänge und die Grundsätze der Optik können in Algorithmen derart abgebildet werden, dass immer ein zu einem Spiegel identisches Bild auf dem Display angezeigt wird. Durch die Erkennung der Kopfbewegung und der Augenbewegung kann direkt auf die Position des Kopfes beziehungsweise der Augen geschlossen werden. Daraus lässt sich beispielsweis die Größe des Fahrers ermitteln. Das angezeigte Bild kann somit automatisch ohne manuelles Zutun des Fahrers an unterschiedliche Fahrer angepasst werden. Ein Verstellen der Spiegel oder der Displays entfällt somit.

Weiterhin ist es zu bevorzugen, wenn die nachfolgenden Schritte durchlaufen werden:
▪ Aufnehmen eines Bildes durch zumindest eine am Fahrzeug installierte Kamera,
▪ Auswerten und Bearbeiten des Bildes in einer Recheneinheit,
▪ Erfassen der Blickrichtung des Fahrers,
▪ Abgleich der erfassten Blickrichtung mit dem vorgebbaren Vergleichsblickfeld,
▪ Anzeigen des ausgewerteten und bearbeiteten Bildes der Kamera auf dem im Vergleichsblickfeld liegenden Display, wenn die erfasste Blickrichtung indiziert, dass der Blick des Fahrers zumindest teilweise in das Vergleichsblickfeld fällt.

Hierdurch wird vorteilhaft sichergestellt, dass das Bild nur dann angezeigt wird, wenn der Fahrer tatsächlich auf das Display oder in die Nähe des Displays blickt. Sofern dies nicht der Fall ist bleibt das Display inaktiv und somit transparent.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von einem Ausführungsbeispiel unter Bezugnahme auf die Zeichnung detailliert erläutert. In der Zeichnung zeigt:

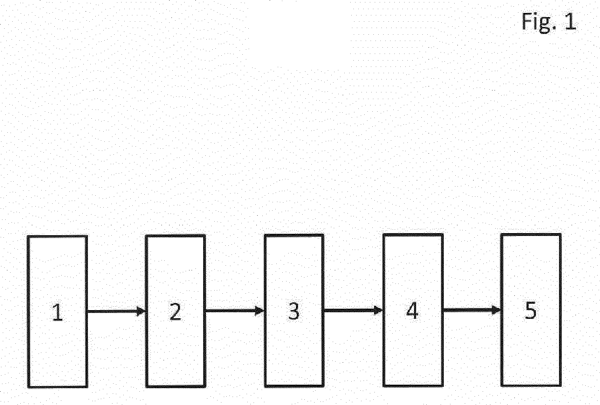

- Fig. 1: ein Blockdiagramm zur Verdeutlichung des erfindungsgemäßen Verfahrens.

### Bevorzugte Ausführung der Erfindung

Die Figur 1 zeigt ein Blockdiagramm zur Verdeutlichung des erfindungsgemäßen Verfahrens. In Block 1 wird durch eine oder mehrere am Fahrzeug installierte Kameras ein Bild von dem das Fahrzeug umgebenden Außenbereich aufgenommen. Der Außenbereich ist bevorzugt durch den rückwärtigen Bereich gebildet, der von dem Fahrer in einem Fahrzeug mit einem spiegelbasierten System zur Sicherstellung der rückwärtigen Sicht gewöhnlich über die Rückspiegel betrachtet wird. Das Bild wird vorteilhafterweise kontinuierlich aufgenommen, so dass eine Anzeige der aufgenommenen Bilder in Echtzeit ermöglicht wird.

Bevorzugt sind Vorrichtungen und Verfahren realisiert, die eine Überprüfung der aufgenommenen Bilder vornimmt, um den Ausfall der Kamera oder die zeitversetzte Weiterleitung oder Aufnahme zu erkennen.

Der Block 2 stellt den Schritt des Auswertens und des Bearbeitens der aufgenommenen Bilder in einer der Kamera nachgeschalteten Recheneinheit dar. Hier wird die Plausibilität der Bilder geprüft, indem beispielsweise den Aufnahmen ein Zeitstempel zugeordnet wird. Hiermit soll insbesondere ein Einfrieren der Bilder verhindert werden oder ein Zeitversatz zwischen dem tatsächlichen Geschehen und den angezeigten Bildern. Weiterhin kann in der Recheneinheit die Aufbereitung der Bilder stattfinden. Hierzu kann beispielsweise aus dem aufgenommenen Gesamtbild ein Teilbereich herausgelöst werden, um eine Detailansicht zu ermöglichen. Auch weitere bekannte Bildbearbeitungen können hier stattfinden.

Im Block 3 wird die Blickrichtung des Fahrers erfasst, indem beispielsweise die Kopfbewegung und/oder die Augenbewegung durch eine im Fahrzeug installierte Kamera erfasst wird. Hierdurch kann genau ermittelt werden was der Fahrer aktuell im Fahrzeug betrachtet. In einer weiteren Ausgestaltung kann die Information über den Blickwinkel auch an die Recheneinheit weitergeben werden, um beispielsweise das aufgenommene Bild in Abhängigkeit der Blickrichtung des Fahrers anzupassen.

In Block 4 wird die erfasste Blickrichtung mit einem vorgebbaren Vergleichsblickfeld abgeglichen, um zu ermitteln ob der Fahrer seinen Blick direkt auf einen im Vergleichsblickfeld angeordneten Gegenstand, wie beispielsweise das Display, gerichtet hat. Das Vergleichsblickfeld kann dazu willkürlich festgelegt werden, solange es das Display ganz oder zumindest teilweise enthält. Auf diese Weise kann festgestellt werden, ob der Blick des Fahrers auf das Display gerichtet ist oder zumindest auf einen direkt zum Display benachbarten Bereich.

In Block 5 wird schließlich das von einer Kamera oder von mehreren Kameras aufgenommene Bild auf dem Display, welches im Vergleichsblickfeld angeordnet ist, angezeigt, sofern in Block 4 erkannt wurde, dass der Fahrer auf das Display oder in einen direkt benachbarten Bereich blickt. Sofern erkannt wird, dass der Blick des Fahrers an dem Display beziehungsweise dem kompletten Vergleichsblickfeld vorbei geht, wird eine Anzeige auf dem Display unterdrückt und das Display bleibt infolge seiner Beschaffenheit transparent und stellt somit keine optische Beeinträchtigung des Fahrers dar.

Das gemäß der Figur 1 beschriebene Verfahren ist beispielhaft. Es besitzt insbesondere keinen beschränkenden Charakter und ist durch weitere Aspekte im Rahmen der Offenbarung dieser Schrift beliebig erweiterbar oder präzisierbar.

## Patentansprüche

1. Verfahren zur Darstellung von zumindest einem Kamerabild auf einem Display in einem Fahrzeug mit einem kamerabasierten System zur Sicherstellung der rückwärtigen und/oder der seitlichen Sicht, mit zumindest einer Kamera und mit zumindest einem Anzeigeelement, auf welchem das von der Kamera aufgenommene Bild anzeigbar ist, wobei das Anzeigeelement durch zumindest ein im inaktiven Zustand transparentes Display gebildet ist, und wobei auf dem Display abhängig von der ermittelten Blickrichtung des Fahrers ein von einer Kamera aufgenommenes Bild dargestellt wird, wobei es ansonsten transparent bleibt, **dadurch gekennzeichnet, dass** das auf dem Display angezeigte Bild abhängig von der erfassten Blickrichtung des Fahrers angepasst wird, wobei ein Verschwenken und/oder ein Verdrehen und/oder ein Zoomen des angezeigten Bildes in Abhängigkeit von der erfassten Blickrichtung des Fahrers vorgenommen wird.

2. Verfahren nach Anspruch 1, **dadurch gekennzeichnet, dass** auf dem Display ein Bild angezeigt wird, wenn der Blick des Fahrers auf das Display gerichtet ist.

3. Verfahren nach Anspruche 1 oder 2, **dadurch gekennzeichnet, dass** ein Vergleichsblickfeld definiert wird, wobei das Display in dem Vergleichsblickfeld angeordnet ist, wobei ein Bild auf dem Display angezeigt wird, wenn die Blickrichtung des Fahrers auf das Vergleichsblickfeld gerichtet ist.

4. Verfahren nach einem der vorhergehenden Ansprüche, **dadurch gekennzeichnet, dass** das von der Kamera aufgenommene Bild in einer Recheneinheit verarbeitet und bearbeitet wird bevor es auf einem Display dargestellt wird, wobei das Bild derart angepasst wird, dass es mit dem von dem Fahrer bei seiner jeweiligen Blickrichtung zu sehende Bild bei Verwendung eines gewöhnlichen Spiegels identisch ist.

5. Verfahren nach einem der vorhergehenden Ansprüche, **dadurch gekennzeichnet, dass** die nachfolgenden Schritte durchlaufen werden:
▪ Aufnehmen eines Bildes durch zumindest eine am Fahrzeug installierte Kamera,
▪ Auswerten und Bearbeiten des Bildes in einer Recheneinheit,
▪ Erfassen der Blickrichtung des Fahrers,
▪ Abgleich der erfassten Blickrichtung mit dem vorgebbaren Vergleichsblickfeld,
▪ Anzeigen des ausgewerteten und bearbeiteten Bildes der Kamera auf dem im Vergleichsblickfeld liegenden Display, wenn die erfasste Blickrichtung indiziert, dass der Blick des Fahrers zumindest teilweise in das Vergleichsblickfeld fällt.

## Claims

1. Method for presenting at least one camera image on a display in a vehicle having a camera-based system for ensuring rearward and/or side vision, having at least one camera and having at least one display element on which the image recorded by the camera can be displayed, wherein the display element is formed by at least one display which is transparent in the inactive state, and wherein an image recorded by a camera is presented on the display on the basis of the determined viewing direction of the driver, wherein the display otherwise remains transparent, **characterized in that** the image displayed on the display is adapted on the basis of the captured viewing direction of the driver, wherein the displayed image is pivoted and/or rotated and/or zoomed on the basis of the captured viewing direction of the driver.

2. Method according to Claim 1, **characterized in that** an image is displayed on the display when the driver's gaze is directed to the display.

3. Method according to Claim 1 or 2, **characterized in that** a comparative field of view is defined, wherein the display is arranged in the comparative field of view, wherein an image is displayed on the display when the viewing direction of the driver is directed to the comparative field of view.

4. Method according to one of the preceding claims, **characterized in that** the image recorded by the camera is processed and edited in a computing unit before it is presented on a display, wherein the image is adapted in such a manner that it is identical to the image to be seen by the driver in his respective viewing direction if a conventional mirror is used.

5. Method according to one of the preceding claims, **characterized in that** the following steps are run through:
▪ recording an image by means of at least one camera installed on the vehicle,
▪ evaluating and editing the image in a computing unit,
▪ capturing the viewing direction of the driver,
▪ comparing the captured viewing direction with the predefinable comparative field of view,
▪ displaying the evaluated and edited image from the camera on the display in the comparative field of view if the captured viewing direction indicates that the driver's gaze at least partially falls in the comparative field of view.

## Revendications

1. Procédé d'affichage d'au moins une image de caméra sur un afficheur dans un véhicule, comportant un système à caméra assurant une vision arrière et/ou latérale, comportant au moins une caméra et au moins un élément d'affichage sur lequel l'image prise par la caméra peut être affichée, dans lequel l'élément d'affichage est constitué par au moins un afficheur transparent dans un état inactif, et dans lequel une image prise par une caméra est représentée sur l'afficheur en fonction de la direction de vision déterminée du conducteur, celui-ci restant transparent dans le cas contraire, **caractérisé en ce que** l'image affichée sur l'afficheur est adaptée en fonction de la direction de vision détectée du conducteur, dans lequel un pivotement et/ou une rotation et/ou un zoom de l'image affichée est effectué en fonction de la direction de vision détectée du conducteur.

2. Procédé selon la revendication 1, **caractérisé en ce qu'**une image est affichée sur l'afficheur lorsque le regard du conducteur est dirigé vers l'afficheur.

3. Procédé selon les revendications 1 ou 2, **caractérisé en ce qu'**un champ de vision de comparaison est défini, dans lequel l'afficheur est disposé dans le champ de vision de comparaison, dans lequel une image est affichée sur l'afficheur lorsque la direction de vision du conducteur est dirigée vers le champ de vision de comparaison.

4. Procédé selon l'une des revendications précédentes, **caractérisé en ce que** l'image prise par la caméra est transformée et traitée dans une unité de calcul avant qu'elle soit représentée sur un afficheur, dans lequel l'image est adaptée de manière à ce qu'elle soit identique à l'image devant être vue par le conducteur dans sa direction de vision respective lors de l'utilisation d'un miroir ordinaire.

5. Procédé selon l'une des revendications précédentes, **caractérisé par** les étapes suivantes :
- capturer une image au moyen d'au moins une caméra installée sur le véhicule,
- évaluer et traiter l'image dans une unité de calcul,
- détecter la direction de vision du conducteur,
- aligner la direction de vision détectée avec le champ de vision de comparaison prédéfini,
- afficher l'image évaluée et traitée de la caméra sur l'afficheur situé dans le champ de vision de comparaison lorsque la direction de vision détectée indique que le regard du conducteur se situe au moins partiellement dans le champ de vision de comparaison.
